# EUROPEAN PATENT APPLICATION

(11) **EP 0 915 333 A1**
(43) Date of publication of application: **12.05.1999**
(21) Application number: 97119245.5
(22) Date of filing: 04.11.1997
(51) Int. Cl.: G01N 27/28

(54) **Electrochemical microcell for laboratory use in a "hot cell"**

(71) Applicant: EUROPEAN COMMUNITY, 2920 Luxembourg (LU)
(72) Inventor: Wegen, Detlef, 76297 Stutensee-Blankenloch (DE); Bottomley, Paul, 76327 Pfinztal-Kleinsteinbach (DE); Dockendorf, Georges, 76344 Eggenstein-Leopoldshafen (DE)
(74) Representative: Weinmiller, Jürgen

(57) **Abstract**

This invention refers to an electrochemical microcell for laboratory use in an inaccessible area such as a "hot cell" where the handling of the microcell is ensured by telemanipulators, the microcell comprising a body (1) and two main electrodes (5, 6) facing each other inside the body and defining an interelectrode space which in operation is filled with a liquid electrolyte.

According to the invention the main electrodes are aligned along a common axis (4) and the microcell body (1) is mounted on a stand (2) in such a manner, that it can be tilted between an operating position and an inverted position, both defined by abutments on the stand, the tilt angle being at least 90°.

## Description

This invention refers to an electrochemical microcell for laboratory use in an inaccessible area such as a "hot cell" where the handling of the microcell is ensured by telemanipulators. The microcell comprises a hollow body and two main electrodes facing each other inside the body and defining an interelectrode space which in operation is filled with a liquid electrolyte.

Electrochemical cells of this type are used primarily for analytical studies of materials which in the cell constitute either an electrode or the electrolyte. Classically such a cell comprises a recipient filled with the electrolyte and having two rod-shaped or plane electrodes penetrating from above in a parallel configuration into the electrolyte. The recipient is either open or hermetically sealed during operation.

If the materials to be analyzed are dangerous for men the cell must be operated in an inaccessible area such as a glove box or a hot cell. Especially in the last-mentioned case handling problems arise from the fact that the telemanipulators have a reduced sensitivity and mobility compared to a direct manual handling. Especially if the quantity of analyzed material and consequently also the cell size becomes small (which is often the case for radioactive materials) the classical electrochemical cells become unsatisfactory.

It is therefore an aim of the present invention to propose an electrochemical cell of the type cited above which has a reduced electrolyte volume and a correspondingly reduced interspace between the electrodes. This "micro-"cell should be able to be handled in a hot cell by telemanipulators through the thick wall of the hot cell.

This aim is achieved by the fact that the main electrodes are aligned along a common axis and that the microcell body is mounted on a stand in such a way that it can be tilted between the operating position and an inverted position, both defined by abutments on the stand, the tilt angle being at least 90°.

As far as preferred embodiments of the invention are concerned, reference is made to the dependent claims.

It might be evident to align the main electrodes along a common axis in order to reduce the electrolyte volume to the effective electrode interspace as in this case the interelectrode distance can be made rather short. However this signifies that electrodes must be accessible from opposite faces of the cell body in order to insert, adjust and withdraw the electrodes and to connect them to current sources or measurement instruments. Unfortunately manipulators have a good facility for manipulation from above and from the side but a very poor one for manipulation from below. These circumstances exclude a direct application of this idea to remotely handled microcells.

The invention will be described hereafter in more detail by means of a preferred embodiment which is shown in an elevation view in the attached drawings.

The body 1 of the cell is mounted on a stand 2 and can be tilted between two positions, an operating position shown in continuous lines on the right-hand side of the drawings and an inverted position shown in interrupted lines on the left-hand side of the drawings. Tilting takes place about a tilt axis 3 which attaches one edge of the body 1 to the stand 2.

The electrochemical cell body according to this embodiment comprises apertures for the two main electrodes which are aligned according to a common axis 4. This common axis 4 is parallel to the plane of the drawings whereas the tilt axis is perpendicular thereto.

One of the main electrodes is called working electrode 5 (only the aperture in the body to receive it is shown) and contains at its inner tip the material to be analyzed whereas the other main electrode is called counter electrode 6 and is constituted for example by a platinum plate. Both main electrodes present flat tip surfaces perpendicular to the axis 4 and define there-between the inter-electrode space whose volume is only about 3 ml for an electrode distance of 1 cm.

In the operating position shown on the right-hand side of the stand 2 the common electrode axis 4 is inclined by about 45° with respect to the vertical, the working electrode 5 being located above the counter electrode 6. In this position a filling aperture 7 penetrates vertically from above into the interelectrode space and permits the injection of electrolyte which under operating conditions fills at least the interelectrode space, the upper level of the electrolyte bearing the reference 8.

In this embodiment there is further provided a reference electrode aperture 9 for inserting a Luggin probe intended to measure the potential in the interelectrode space some millimetres above the centre of the working electrode surface. It is thus positioned to make accurate working electrode potential measurements. The axis of the reference electrode intersects perpendicularly the common main electrode axis 4.

In both positions the cell body 1 rests on a support plate which is integral with the stand 2 and which contains two portions 10 and 11 for abutment with the body 1 in the operating and the reverse position respectively. The angle between these portions thus corresponds to the tilt angle. It is preferably chosen at 120°. A bent end portion 10 supports a locking knob 12 which is spring loaded and cooperates in the operating position with a blind hole 13 in the body.

The microcell is used as follows:

The empty cell body is placed in its reverted position (shown in interrupted lines) and the platinum plate counter electrode 6 is positioned and screwed in from above by means of the manipulators. To this end, the counter electrode is provided with a square-ended grip 14 and four spigots 15 which can be gripped without difficulties by the manipulator. In position the flat circular face of the platinum electrode makes a water-tight seal for the cell bottom. The electrical connection of the counter electrode is ensured by one of four holes located at right angles under the spigots 15. At least one of these holes is always accessible for the insertion of a banana plug.

The cell is then reverted to its operating position and is locked in this position by means of the knob 12. A fixed volume (3ml) of the desired electrolyte is then injected into the cell by a pipette via the filling aperture 7.

The working electrode aperture which in the reverted position was covered by the support plate portion 11, is now readily accessible for the insertion of the working electrode. This pre-assembled electrode comprises at the tip a polished test surface, for example from an irradiated UO₂ fuel sample, and cooperates with shoulders in the body 1 in such a way that the polished test surface is parallel with the counter electrode at approximately 1 cm distance when fully inserted. An enlargement in the aperture for the working electrode at mid-hight allows the excess electrolyte to be collected as it rises up around the electrode during insertion of the latter without spilling out. It also facilitates the electrode withdrawal, and the electrode can be held at this mid-way position for electrolyte to drain off. As the electrolyte is added before the working electrode is inserted, air bubbles cannot be caught on the electrode surface.

Finally the reference electrode (a classical Luggin probe which is not shown) is inserted into the reference electrode aperture 9. It cooperates with a conical neck protruding from the body 1 and permitting a protective polymer tube 16 to be screwed there-on. The square-ended outer section of the tube facilitates again the handling by means of manipulators. The tip of the Luggin probe (it is the potential measurement point) extends to a point above the centre of the working electrode surface and lies approximately 3 mm above it. It is thus positioned to perform accurate working electrode potential measurements. The reference electrode has been checked beforehand against a primary standard for proper function.

The electrolyte should now occupy the cross-hatched volume and reach the upper level 8 when all electrodes are in position. This can be verified visually or by closed-circuit TV monitors through the transparent body 1. Now the filling aperture is closed with a plug (not shown).

The electrode connecting leads are then inserted into the socket of the respective electrodes in accordance with the intended measurement. These connections lead to measuring instruments such as a voltmeter for corrosion potential measurements or to a frequency response analyzer for impedance measurements.

When the measurements are terminated the electrodes are disconnected and the filling aperture plug is removed. There-after the reference electrode is removed and its tip is rinsed with distilled water. Similarly the working electrode is withdrawn and rinsed. The electrolyte is sucked out through a micropipette and distilled water is injected thereby rinsing down the three opened apertures as well. Finally a dilute acid is injected for cleaning the absorbed material.

All these operations are performed while the body 1 is in the operating position. For the withdrawal of the counter electrode 6 the locking knob 12 is operated by the manipulator to release the body. After the tilting of the body to the reverted position the counter electrode becomes accessible for dismounting. Since all the apertures are now open the entire inside of the body can be decontaminated mechanically and/or chemically and even the entire block can be unscrewed from the stand and soaked in a decontamination solution.

The use of transparent polymethyl methacrylate material for the body 1 allows to optically check the correct and repeatable positioning of the electrodes as the interelectrode distances are important. Of course other materials might be used, especially in order to cope with the corrosive power of the electrolyte to be used.

The invention is not limited to the embodiment as described and shown in the drawings. Especially the tilting angle can be defined according to the requirements of the manipulators in the hot cell. The angle between the two positions should be at least 90° and at most 180°. In the latter case, a third, intermediate position can be useful in which the filling aperture is vertical.

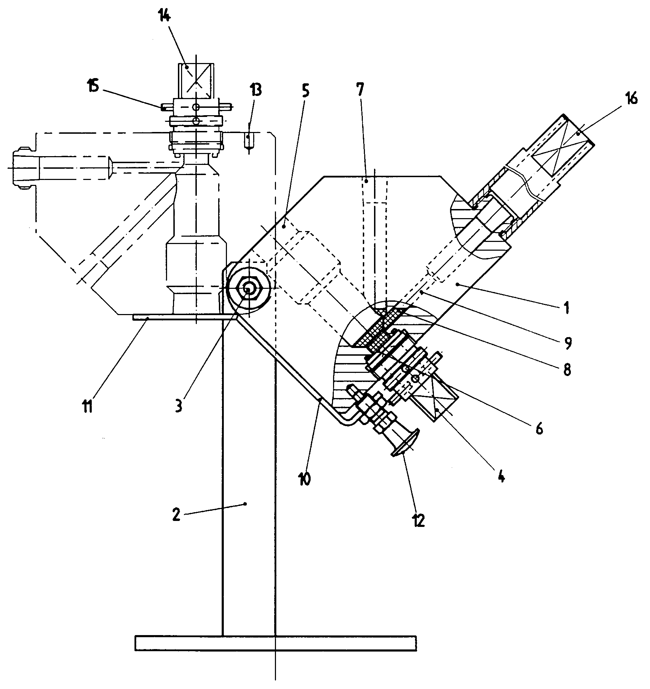

## Claims

1. An electrochemical microcell for laboratory use in an inaccessible area such as a "hot cell" where the handling of the microcell is ensured by telemanipulators, the microcell comprising a body (1) and two main electrodes (5, 6) facing each other inside the body and defining an inter-electrode space which in operation is filled with a liquid electrolyte, characterized in that the main electrodes are aligned along a common axis (4) and that the microcell body (1) is mounted on a stand (2) in such a manner, that it can be tilted between an operating position and an inverted position, both defined by abutments on the stand, the tilt angle being at least 90°.

2. A microcell according to claim 1, characterized in that the tilt axis (3) is directed horizontally and perpendicularly to the plane in which the common axis (4) tilts.

3. A microcell according to claim 1 or 2, characterized in that the stand (2) comprises a cell body support plate with two abutment portions (10, 11) for the body (1) according to the operating and reverted position respectively.

4. A microcell according to claim 3, characterized in that the support plate (10, 11) is provided with spring-loaded locking means (12) designed to lock the body in the operating position.

5. A microcell according to any one of the preceding claims, characterized in that in the inverted position the common axis (4) of the main electrodes is vertical.

6. A microcell according to any one of the preceding claims, characterized in that in the operating position an electrolyte filling aperture (7) is vertical.

7. A microcell according to any one of the preceding claims, characterized in that the body (1) is made from a transparent polymer material, such as polymethyl methacrylate.
